# EUROPEAN PATENT SPECIFICATION

(11) **EP 3 212 501 B1**
(45) Date of publication and mention of the grant of the patent: **09.09.2020**
(21) Application number: 15855175.4
(22) Date of filing: 27.10.2015
(51) Int. Cl.: B64D 11/00, E05B 53/00

(54) **OVERHEAD STORAGE BIN LATCH SYSTEM**
ÜBERKOPFGEPÄCKABLAGEVERRIEGELUNGSSYSTEM
SYSTÈME DE VERROU POUR COMPARTIMENT DE RANGEMENT SUPÉRIEUR

(30) Priority: 27.10.2014 US 201462069163 P; 10.07.2015 US 201514796829
(43) Date of publication of application: 06.09.2017
(73) Proprietor: C&D Zodiac, Inc., Huntington Beach, CA 92647 (US)
(72) Inventor: KEARSEY, Stephen, Huntington Beach, CA 92647 (US); LONG, Eric, Huntington Beach, CA 92647 (US); SAVIAN, Scott, Huntington Beach, CA 92647 (US)
(74) Representative: Stevenson-Hill, Jack Patrick
(86) International application number: PCT/US2015/057513
(87) International publication number: WO 2016/069558

(56) References cited:
- EP-A2- 1 927 711
- DE-U1-202010 000 528
- DE-U1-202014 101 793
- US-A1- 2011 254 705
- US-A1- 2014 197 721
- US-B2- 8 480 029
- US-B2- 8 708 377

## Description

### FIELD OF THE INVENTION

The present invention relates generally to a latch system, and more particularly to a latch system for an aircraft overhead storage bin.

### BACKGROUND OF THE INVENTION

Overhead storage bins in aircraft typically include latching systems to secure the pivotal bucket to the upper housing. According to a machine translation of its abstract, DE-U-202010000528 describes a locking mechanism for a housing with a lid, in particular a luggage box, with at least two locks, which are each connected by means of a transfer member with a push button, characterized in that between each lock (110) and the push button (148) mounted a free wheel (154) that keeps in a depressed position in cooperation with the lock (110) the push button (148) as long as not all the housing (121) associated with the lock (110) is correctly locked position. US-A-2014/169279 refers to a latch assembly for a vehicle seat. However, many latch systems have proven unreliable. Accordingly, a need exists for an improved latch system.

### SUMMARY OF THE PREFERRED EMBODIMENTS

In accordance with a first aspect of the present invention there is provided a latch assembly in accordance with appended claim 1. Other preferred embodiments are defined by the appended dependent claims.

In accordance with another aspect of the present invention there is provided an aircraft storage bin in accordance with appended claim 10 and a method of opening a storage bin in accordance with appended claim 11.

### BRIEF DESCRIPTION OF THE DRAWINGS

The invention may be more readily understood by referring to the accompanying drawings in which:
FIG. 1 is a perspective view of a latch system in accordance with a preferred embodiment of the present invention;
FIG. 2 is a perspective view of a dual pivot bin assembly with the latch system of FIG. 1 incorporated therein;
FIG. 3 is a perspective view of the bucket of the a dual pivot bin assembly with the latch system of FIG. 1 incorporated therein;
FIG. 4 is a perspective view of the paddle button assembly of the latch system of FIG. 1;
FIG. 5A is a cross-sectional view of the paddle button assembly with the button in the home position;
FIG. 5B is a cross-sectional view of the paddle button assembly with the button in the actuation position;
FIG. 6 is an elevational view of the latch assembly of the latch system of FIG. 1 with a portion of the housing removed and with the hook assembly and the striker assembly engaged with one another;
FIG. 7 is an elevational view of the latch assembly of the latch system of FIG. 1 with a portion of the housing removed and with the hook assembly and the striker assembly disengaged from one another;
FIG. 8 is a cross-sectional view of the paddle button assembly with the indicator in the second position and the button in the home position;
FIG. 9A is a perspective view of the paddle button assembly on the bucket with the indicator in the first position; and
FIG. 9B is a perspective view of the paddle button assembly on the bucket with the indicator in the second (indication) position.

Like numerals refer to like parts throughout the several views of the drawings.

### DETAILED DESCRIPTION OF THE PREFERRED EMBODIMENTS

The following description and drawings are illustrative and are not to be construed as limiting. Numerous specific details are described to provide a thorough understanding of the disclosure. However, in certain instances, well-known or conventional details are not described in order to avoid obscuring the description. References to one or an embodiment in the present disclosure can be, but not necessarily are references to the same embodiment; and, such references mean at least one of the embodiments.

Reference in this specification to "one embodiment" or "an embodiment" means that a particular feature, structure, or characteristic described in connection with the embodiment is included in at least one embodiment of the-disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

The terms used in this specification generally have their ordinary meanings in the art, within the context of the disclosure, and in the specific context where each term is used. Certain terms that are used to describe the disclosure are discussed below, or elsewhere in the specification, to provide additional guidance to the practitioner regarding the description of the disclosure. For convenience, certain terms may be highlighted, for example using italics and/or quotation marks: The use of highlighting has no influence on the scope and meaning of a term; the scope and meaning of a term is the same, in the same context, whether or not it is highlighted.

It will be appreciated that the same thing can be said in more than one way. Consequently, alternative language and synonyms may be used for any one or more of the terms discussed herein. No special significance is to be placed upon whether or not a term is elaborated or discussed herein. Synonyms for certain terms are provided. A recital of one or more synonyms does not exclude the use of other synonyms. The use of examples anywhere in this specification including examples of any terms discussed herein is illustrative only, and is not intended to further limit the scope and meaning of the disclosure or of any exemplified term. Likewise, the disclosure is not limited to various embodiments given in this specification.

Without intent to further limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. Unless otherwise defined, all technical and scientific terms used herein have the same meaning as commonly understood by one of ordinary skill in the art to which this disclosure pertains. In the case of conflict, the present document, including definitions, will control.

It will be appreciated that terms such as "front," "back," "top," "bottom," "side," "short," "long," "up," "down," "aft," "forward," "inboard," "outboard" and "below" used herein are merely for ease of description and refer to the orientation of the components as shown in the figures. It should be understood that any orientation of the components described herein is within the scope of the present invention.

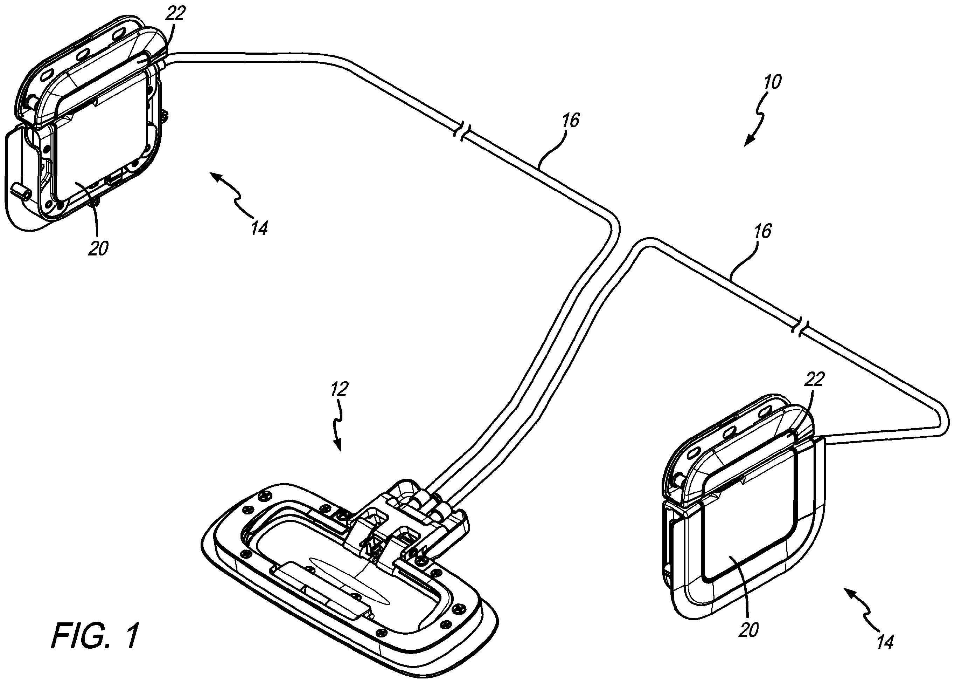

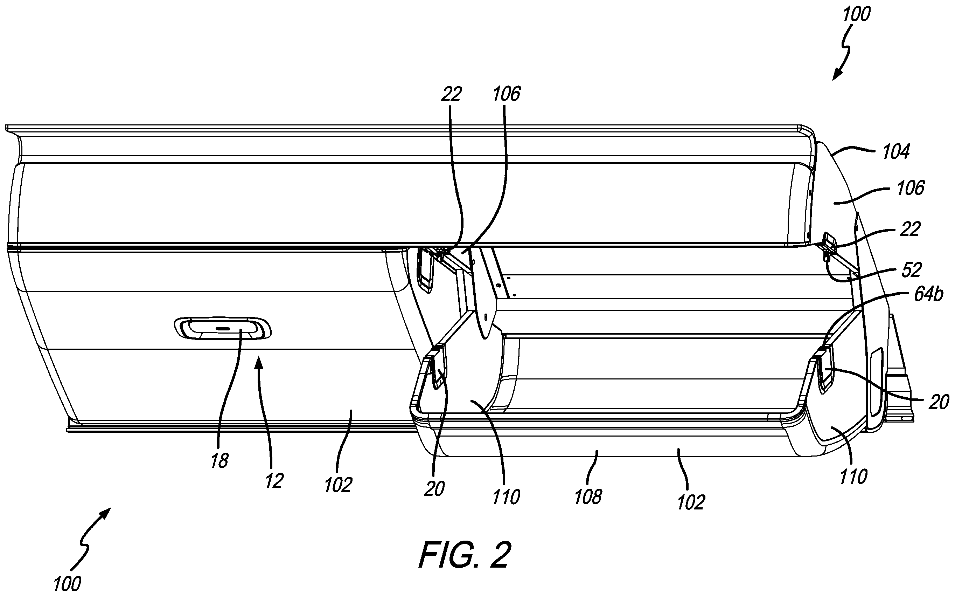

Referring now to the drawings, wherein the showings are for purposes of illustrating the present invention and not for purposes of limiting the same, FIGS. 1-9B show an embodiment of a latch system 10. However, this is not a limitation on the present invention and the latch system 10 can be used elsewhere. As shown in FIG. 1, generally, the latch system 10 includes a paddle button assembly 12, first and second latch assemblies 14 and first and second cables 16 extending between the paddle button assembly 12 and the first and second latch assemblies 14. As shown in FIG. 2, the latch system 10 can be used with a pivot bin assembly 100, such as those used in commercial passenger aircraft. However, this is not a limitation on the present invention and the latch system 10 can be used elsewhere. Preferably, the latch system 10 is used with an aircraft storage bin 100 that includes a bucket 102 that is pivotally connected to an upper housing 104. Preferably, the upper housing 104 includes first and second side panels 106. The bucket 102 cooperates with the upper housing to define a bin interior and is movable with respect to the upper housing 104 between an open position and a closed position. In a preferred embodiment, the bucket 102 includes a bottom 108 and first and second side walls 110. In another embodiment, the bucket can also include a top. For example, see the bucket taught in U.S. Patent Publication No. 2011/0253837, published on October 20, 2011 (the " '837 publication").

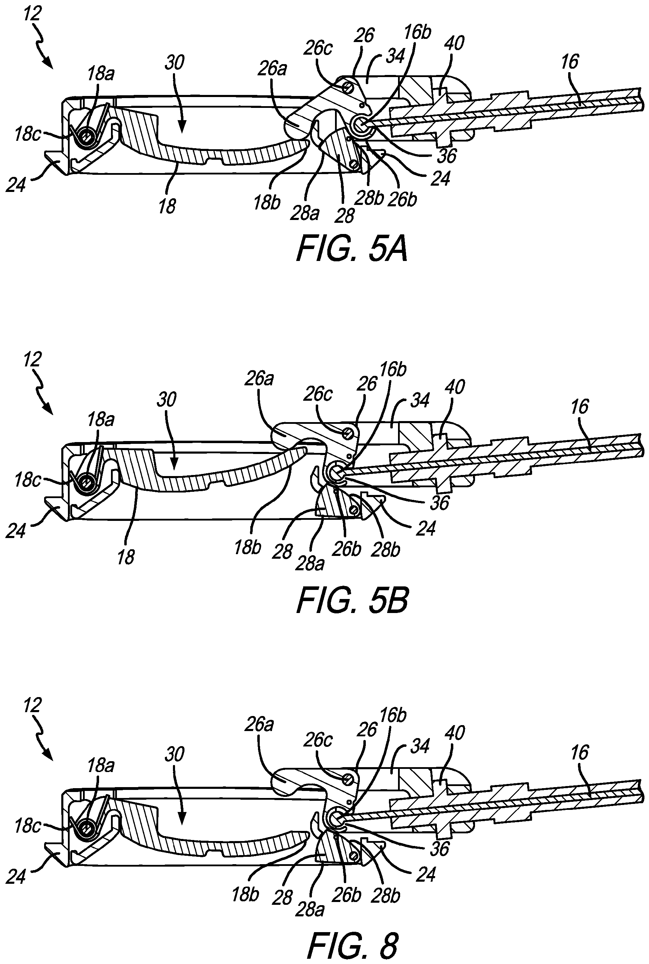

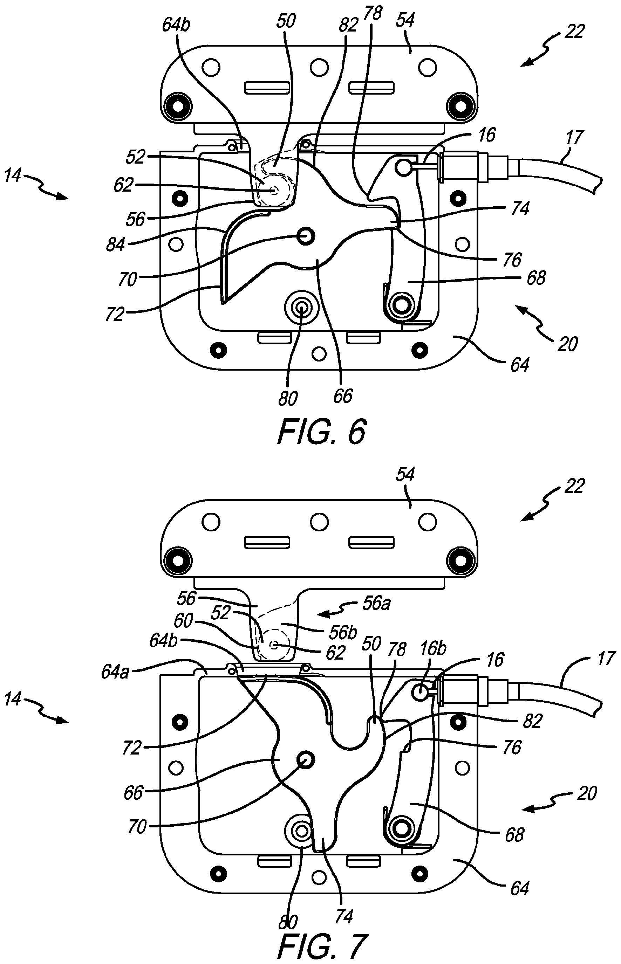

As shown in FIG. 1, the latch system the paddle button assembly 12 includes a button 18 that is movable between a home position and an actuation position (see FIGS. 5A and 6B), the first and second latch assemblies 14 includes a first hook assembly 20 and a first striker assembly 22, and the first and second cables 16 extends between the paddle button assembly 12 and the first and second latch assemblies 14. The first and second latch assemblies 14 can be associated with the side panels and side walls of the upper housing 104 and bucket 102 or they can be associated with the front of the upper housing 104 and bucket 102. It will be appreciated that only a single latch assembly 14 can be utilized (on one side or in the middle of the bucket and upper housing).

As shown in FIG. 2, in a preferred embodiment, the paddle button assembly 12 is associated with or mounted on or in the bucket 102. However, in another embodiment, the paddle button assembly 12 can be associated with or mounted on or in the upper housing. In a preferred embodiment, the first and second hook assemblies 20 are associated with one of the bucket 102 and the upper housing 104 and the first and second striker assemblies 22 are associated with the other of the bucket 102 and the upper housing 104. The drawings show the hook assemblies 20 mounted in the side walls 110 of the bucket 102 and the striker assemblies 22 mounted in and extending downwardly from the side panels 106 of the upper housing 104. However, this arrangement can be reversed. In the embodiment shown in the drawings, the hook and striker assemblies 20 and 22 are generally aligned with the side walls and side panels, which allows the clamshell type bin to close. However, in another embodiment, the hook and striker assemblies 20 and 22 can be mounted on the inside of outside of the side walls or side panels. For example, if the latch system 10 was used with the pivot bin assembly taught in the '837 publication, the striker assemblies 22 could be mounted on the inner surfaces the side panels of the stationary upper housing and the hook assemblies 20 could be mounted on the outer surfaces of the side walls of the pivoting bin or vice versa.

Generally, movement of the button 18 from the home position (see FIG. 5A) to the actuation position (see FIG. 5B) moves the cables 16, thereby disengaging the hook assemblies 20 and the striker assemblies 22, thereby allowing the bucket to move from the closed position to the open position. This arrangement will be further described below.

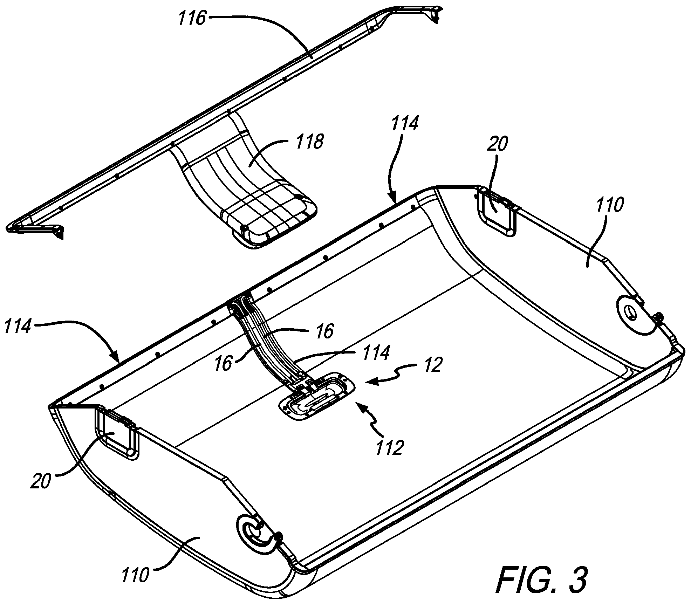

As shown in FIG. 3, in a preferred embodiment, paddle button assembly 12 is mounted in an opening 112 defined in the bottom 108 of the bucket 102. The cables 16 extend through a channel 114 defined in either the bucket 102, between the bucket 102 and trim 116 or in the trim. FIG. 3 shows the first portion of the channel 114 extending away from the paddle button assembly 12 defined in the bucket and covered by a cover 118 (which is exploded away) and the second portion of the channel 114 defined in the top of the front and side edges of the bucket 102 and to the striker assemblies 22. In another embodiment, the first portion of the channel 114 extends away from the paddle button assembly 12 and is defined in the bucket and covered by the cover 118 and the second portion of the channel 114 is defined between the top of the front and side edges of the bucket 102 and the inner surface of the trim 116. The cables 16 can be exposed or contained in an outer casing 17, similar to cables used for braking on bicycles. The bucket 102 can also includes the cover 118 that is mounted to an inside surface thereof for covering the paddle button assembly 12, cables 16 and associated components.

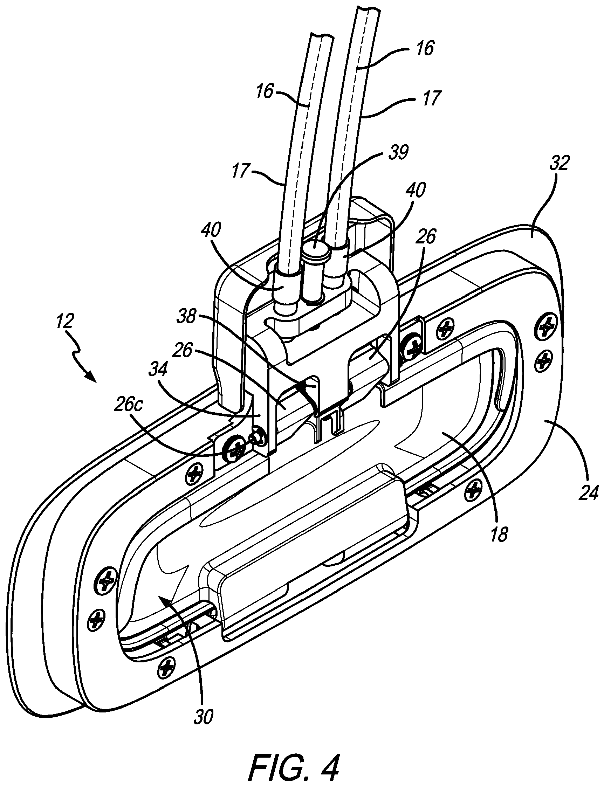

The paddle button assembly 12, which is best shown in FIGS. 4-5B, will now be described. Generally, the paddle button assembly 12 includes a frame 24, the button 18, first and second cam members 26, and an indicator 28 (described below). The frame 24 defines a central opening 30 that at least partially receives the button 18 and has an outer flange 32 that is mounted against the outside surface of the bucket 102. The button 18 is pivotally connected to the frame 24 (preferably by a pivot pin 18a that extends through associated openings in the frame 24 and button 18). The frame 24 also includes a hinge portion 34 that the cam members 26 are pivotally connected to. The hinge portion 34 can be integral with the frame 24 or a separate component.

As is best shown in FIGS. 5A-5B, in a preferred embodiment, the cam members 26 are generally "L" shaped and include a button engaging end 26a and a cable engaging end 26b. Preferably, the cable engaging end 26b includes an opening 36 that receives a ball 16b on the end of the cable 16. However any attachment of the cables 16 to the cable engaging ends 26b of the cam members 26 is within the scope of the present invention. The cam members 26 are preferably received in recesses 38 in the hinge portion 34 and are pivotal with respect to the hinge portion 34 (preferably by pivot pins 26c that extends through associated openings in the hinge portion 34 and button cam members 26).

As shown in FIG. 5A, the end 18b of the button 18 distal from the pivot point is engaged with the button engaging ends 26b of the cam members 26 (only one cam member is shown in FIG. 5A). FIG. 5A demonstrates the home position, which, as described below is associated with the engaged position of the first trigger arm and, ultimately, the closed position of the bin. To open the bin, a user pushes on button 18, which, pivots to the actuation position (shown in FIG. 5B). In a preferred embodiment, the button 18 is biased toward the home position. This can be done by a spring 18c. The distal end 18b of the button 18 pushes the button engaging ends 26a of the cam members 26, thereby pivoting the cam members 26 from a first position (shown in FIGS. 4 and 5A) to a second position (shown in FIG. 5B). The cam members 26 pulls the cables 16 (within casings 17), which ultimately disengages the hook assemblies 20 and the striker assemblies 22, which will be more fully described below. In another embodiment, the button 18 and cam member 26 are oriented to push the cable 16.

In a preferred embodiment, the cables 16 include the capability of being adjusted. This can be useful as the cables may stretch or lengthen over time. In a preferred embodiment, as shown in FIGS. 4-5B, the paddle button assembly 12 includes an adjustment lock 39 and adjustment nuts 40. The adjustment nuts 40 are similar to those used on bicycle brakes and or shifters. The adjustment lock 39 prevents the adjustment nuts 40 from turning when in the locked position and allows turning of the nuts (and, therefore, adjustment) when unlocked.

The latch assemblies 14, one of which is shown in FIGS. 6 and 7, will now be described. Generally, the hook assembly 20 includes a hook 50 that engages a striker 52 on the striker assembly 22. When the hook 50 and striker 52 are engaged, the bucket is in the closed position. When the hook 50 and striker 52 are disengaged (by actuation of the button 18), the bucket moves to the open position.

As shown in FIGS. 6 and 7, in a preferred embodiment, the striker assembly 22 includes a casing 54 that is secured to the upper housing 104 and includes a striker housing 56 extending downwardly therefrom. The striker housing 56 defines a housing interior 58. The striker 52 comprises a bushing 60 that is rotatably received on a pin 62 that spans the housing interior. In a preferred embodiment, the striker housing 56 includes three sides, thereby defining a fourth side opening 56a that, together with the striker 52 defines a hook opening 56b into which the hook 50 is received.

In a preferred embodiment, the hook assembly 20 includes a housing 64 that defines a housing interior that houses the other components. In a preferred embodiment, the housing 64 is received in an opening in the side wall 110 of the bucket 102. The housing 64 includes a top wall 64a that has a striker opening 64b defined therein. Inside the housing 64, the hook assembly 20 includes a rotary member 66 and a pivotal trigger arm 68. The rotary member 66 is rotatably mounted on a pivot axle 70 and includes the hook 50 a closeout member 72 and a catch member 74. The rotary member 66 is rotatable between a first position (see FIG. 6) and a second position (see FIG. 7) and is biased toward the second position (preferably by a torsion spring that is concentric with the pivot pin). The trigger arm 68 is pivotally mounted to a pivot axle 70 and includes a ledge 76 and a ramp portion 78. The trigger arm is pivotal between an engaged position and a disengaged position and is biased toward the engaged position (preferably by a torsion spring that is concentric with the pivot pin).

As shown in FIG. 6, when the rotary member 66 is in the first position, the hook 50 is engaged with the striker 52 and the catch member 74 is engaged with the ledge 76 on the trigger arm 68. In this position, the hook 50 and striker 52 are engaged and the bucket is held in the closed position. When the cable 16 is pulled, as described above, the cable 16 pivots the trigger arm 68 to the disengaged position. In this position, the catch member 74 disengages from the ledge 76, and the rotary member 66 rotates to the second position (due to the bias). In a preferred embodiment, the catch member 74 engages a stop member 80, thereby preventing further rotation of the rotary member 66. As is shown in FIG. 7, when the rotary member 66 is in the second position, the closeout member 72 is aligned with the striker opening 64b in the top wall 64a of the housing 64. It will be understood that this serves two purposes. First, it prevents objects from entering the striker opening 64b. Second, it is part of the process for rotating the rotary member 66 back to the first position when the bucket is closed. In use, when the bucket is pivoted upwardly, the striker 52 enters the striker opening 64b and engages or contacts the closeout member 72. Because the closeout member 72 is offset from the pivot point of the rotary member 66, the engagement of the striker with the closeout member 72 causes the rotary member 66 to start to rotate toward the first position. The closeout member 72 includes a curved surface 84 that the striker 52 continues to push in to finish the rotation to the first position, thereby engaging the hook 50 with the striker 52.

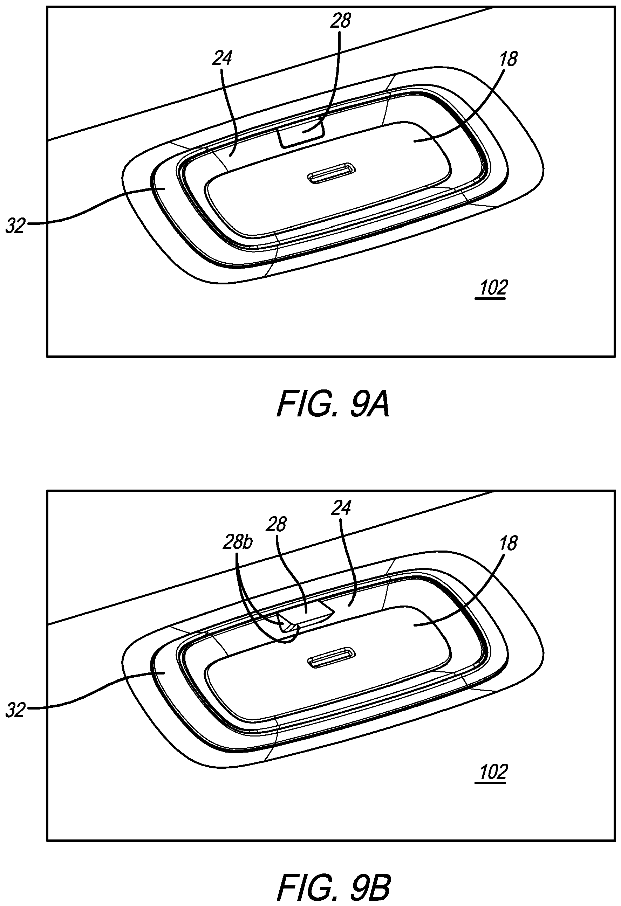

As shown in FIGS. 5A-5B and FIGS. 8-9B, in a preferred embodiment, the paddle button assembly 12 includes an indicator 28 that is pivotally connected to the frame 24 (by a pivot pin) 29 and housed in an opening therein. The indicator 28 generally has a wedge shaped cross-section and is pivotal between a first position (see FIGS. 5A and 9A) where an outer surface 28a is flush with the outside surface of the flange 32 and a second position, where the side surfaces 28b are exposed. The indicator 28 is preferably biased toward the first position. The indicator 28 indicates when one or both of the hooks 50 are not engaged with the strikers 52.

As shown in FIG. 5A, in the first position, the inner surface 28c of the indicator 28 is biased against both cable engaging ends 26b of the cam members 26. In use, when the button 18 is pivoted from the home position to the actuation position (as shown in FIG. 5B), the cam members 26 pivot and the cam engaging end 26b pivots the indicator 28 to the second position, thereby indicating that the hook 50 is not engaged with the striker 52. As is described above, when the cables 16 are pulled, the trigger arms 68 are pivoted from the engaged to the disengaged position, which causes the rotary members 66 to rotate from the first to the second position. It will be appreciated that as the rotary members 66 rotate to the second position, inclined surfaces 82 on the hooks 50 engage the ramp portions 78 of the trigger arms 68, which pivot the trigger arms 78 to the disengaged position and holds them there even after the button 18 has pivoted back to the home position. This action pushes the cables 16, which, in turn holds the cam members 26 and the indicator 28 in their respective second positions, as is shown in FIGS. 8 and 9B. During latching of the hooks 50 and strikers 52, when the trigger arms 78 are both moved to the engaged position, the cables 16 are pulled, thereby pivoting the cam members 26 and the indicator 28 to their respective first positions, as is shown in FIGS. 5A and 9A. It will be understood that if the bucket is closed improperly and only one of the first and second latch assemblies is latched (i.e., one of the strikers is not engaged with its hook), the cam member 26 associated with the unlatched latch assembly will hold the indicator in the second position, thereby indicating that something is wrong. In a preferred embodiment the side surfaces 28b of the indicator are a bright color. Therefore, when the bucket is in the closed position, but one of the latches is not properly latched a user (e.g., a flight attendant) will see that the indicator is in the position shown in FIG. 9B and can address the situation.

It will be appreciate that modifications can be made to the present invention. For example, the cable can be operably engaged with the hook and configured to pivot or rotate the hook to move the hook from a first to a second position and out of engagement with the striker. In this embodiment, the hook is biased toward the first position. To reengage the hook and striker, the hook includes an inclined surface thereon that is engaged by the striker to push the hook to the second position. Then after the striker clears the inclined surface the hook is biased back to the first position and into engagement with the striker. In this embodiment, the hook would act similar to the trigger arm in the current drawings. In the claims this embodiment may be covered by referring to the hook as a trigger arm. In another embodiment, the cable can be configured to pull or push the striker out of engagement with the hook. In another embodiment, the configuration of the button can be reversed so that the button is pulled to pivot and operate the cam members. In another embodiment, the cable is directly connected to the button so that pivoting the button pulls or pushes the cable to operate the latch. In another embodiment, the button is pushed in a linear direction to push the cable to operate the latch.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." As used herein, the terms "connected," "coupled," or any variant thereof, means any connection or coupling, either direct or indirect, between two or more elements; the coupling of connection between the elements can be physical, logical, or a combination thereof. Additionally, the words "herein," "above," "below," and words of similar import, when used in this application, shall refer to this application as a whole and not to any particular portions of this application. Where the context permits, words in the above Detailed Description of the Preferred Embodiments using the singular or plural number may also include the plural or singular number respectively. The word "or" in reference to a list of two or more items, covers all of the following interpretations of the word: any of the items in the list, all of the items in the list, and any combination of the items in the list.

## Claims

1. A latch system (10) comprising:
a paddle button assembly (12) that includes a button (18) that is movable between a home position and an actuation position,
a first latch assembly (14) that includes a first striker assembly (22) and a first hook assembly (20), wherein the first hook assembly (20) includes a first hook (50) and the first striker assembly (22) includes a first striker (52), wherein the first hook assembly (20) includes a first rotary member (66) that includes the first hook (50), wherein the first rotary member (66) is movable between a first position where the first hook (50) is engaged with the first striker (52) and a second position where the first hook (50) is not engaged with the first striker (52),
wherein the first rotary member (66) is enclosed in a housing (64) and includes a first closeout member (72), wherein the housing (64) includes a striker opening (64b) defined in a top wall (64a) thereof, and wherein the first closeout member (72) is generally aligned with the striker opening (64b) so to prevent objects from entering the striker opening (64b) when the first rotary member (66) is in the second position, and
a first cable (16) that extends between the paddle button assembly (12) and the first latch assembly (14), wherein movement of the button (18) from the home position to the actuation position moves the first cable (16), thereby disengaging the first hook assembly (20) and the first striker assembly (22).

2. The latch system (10) of claim 1 wherein movement of the first cable (16) moves one of the first hook (50) and the first striker (52) to disengage the first hook assembly (20) and the first striker assembly (22).

3. The latch system (10) of claim 2 wherein the button (18) is pivotal between the home position and the actuation position, and wherein the pivoting of the button (18) pushes or pulls the first cable (16), thereby disengaging the first hook assembly (20) and the first striker assembly (22).

4. The latch system (10) of claim 3 wherein pivotal movement of the button (18) pushes or pulls the first cable (16), thereby pivoting a first trigger arm (68) from an engaged position to a disengaged position and disengaging the first hook (50) from the first striker (52).

5. The latch system (10) of claim 1 wherein the first rotary member (66) is biased toward the second position.

6. The latch system (10) of claim 5 wherein the first rotary member (66) includes a first catch member (74) that engages a first ledge (76) on the first trigger arm (68) in the first position and a first stop member (80) in the second position.

7. The latch system (10) of claim 2 wherein the paddle button assembly (12) includes a first indicator (28) that is movable from a first position to a second position when the button (18) is moved from the home position to the actuation position.

8. The latch system (10) of claim 4 wherein the paddle button assembly (12) includes a first indicator (28) that is movable from a first position to a second position when the button (18) is moved from the home position to the actuation position, and wherein the first hook (50) maintains the first trigger arm (68) in the disengaged position when the first rotary member (66) is in the second position, thereby maintaining the indicator (28) in the second position.

9. The latch system (10) of claim 2 wherein the button (18) is pivotal between the home position and the actuation position, and wherein pivoting of the button (18) pivots a first cam member (26) that pushes or pulls the first cable (16), thereby disengaging the first hook (50) from the first striker (52).

10. An aircraft storage bin (100) that comprises:
an upper housing (104) that includes first and second side panels (106),
a bucket (102) that cooperates with the upper housing (104) to define a bin interior, wherein the bucket (102) is movable with respect to the upper housing (104) between an open position and a closed position, wherein the bucket includes a bottom (108) and first and second side walls (110), and
a latch system (10) according to any of claims 1 - 9,
wherein the paddle button assembly (12) is associated with one of the bucket (102) and the upper housing (104),
wherein the first hook assembly (20) is associated with one of the bucket (102) and the upper housing (104) and the first striker assembly is associated with the other of the bucket (102) and the upper housing (104), and
wherein said movement of the button (18) from the home position to the actuation position moves the first cable (16), thereby disengaging the first hook assembly (20) and the first striker assembly (22), whereby the bucket (102) moves from the closed position to the open position.

11. A method of opening a storage bin (100), the method comprising the steps of:
moving a button (18) from a home position to an actuation position, wherein movement of the button (18) from the home position to the actuation position moves a first cable (16), thereby disengaging a first hook assembly (20) and a first striker assembly (22), wherein a bucket (102) moves from a closed position to an open position, wherein the first hook assembly (20) includes a first hook (50) and the first striker assembly (22) includes a first striker (52), wherein the first hook assembly (20) includes a first rotary member (66) that includes the first hook (50) wherein the first rotary member (66) is movable between a first position where the first hook (50) is engaged with the first striker (52) and a second position where the first hook (50) is not engaged with the first striker (52), wherein the first rotary member (66) is enclosed in a housing (64) and includes a first closeout member (72), wherein the housing (64) includes a striker opening (64b) defined in a top wall (64a) thereof, and wherein the first closeout member (72) is generally aligned with the striker opening (64b) so to prevent objects from entering the striker opening (64b) when the first rotary member (66) is in the second position.

12. The method of claim 11 wherein movement of the first cable (16) moves one of the first hook (50) and the first striker (52) to disengage the first hook assembly (20) and the first striker assembly (22).

13. The method of claim 12 wherein the button (18) is pivotal between the home position and the actuation position, and wherein the pivoting of the button (18) pushes or pulls the first cable (16), thereby disengaging the first hook assembly (20) and the first striker assembly (22).

14. The method of claim 13 wherein pivotal movement of the button (18) pushes or pulls the first cable (16), thereby pivoting a first trigger arm (68) from an engaged position to a disengaged position and disengaging the first hook (50) from the first striker (52).

## Patentansprüche

1. Verriegelungssystem (10), Folgendes beinhaltend:
Tasterknopfanordnung (12), beinhaltend einen Knopf (18), welcher zwischen einer Ausgangsposition und einer Betätigungsposition beweglich ist,
eine erste Verriegelungsanordnung (14), beinhaltend eine erste Schließeranordnung (22) und eine erste Hakenanordnung (20), wobei die erste Hakenanordnung (20) einen ersten Haken (50) umfasst und die erste Schließeranordnung (22) einen ersten Schließer (52) umfasst, wobei die erste Hakenanordnung (20) ein erstes drehbares Element (66) umfasst, welches den ersten Haken (50) umfasst, wobei das erste drehbare Element (66) zwischen einer ersten Position, in welcher der erste Haken (50) mit dem ersten Schließer (52) in Eingriff steht und einer zweiten Position beweglich ist, in welcher der erste Haken (50) nicht mit dem ersten Schließer (52) in Eingriff steht, wobei das erste drehbare Element (66) in einem Gehäuse (64) eingeschlossen ist, und ein erstes Abschlusselement (72) beinhaltet, wobei das Gehäuse (64) eine in einer oberen Wand (64a) davon definierte Schließeröffnung (64b) umfasst, und wobei das erste Abschlusselement (72) allgemein mit der Schließeröffnung (64b) derart ausgefluchtet ist, dass es Objekte am Eintreten in die Schließeröffnung (64b) hindert, wenn sich das erste drehbare Element (66) in der zweiten Position befindet, und
ein erstes Seil (16), welches sich zwischen der Tasterknopfanordnung (12) und der ersten Verriegelungsanordnung (14) erstreckt, wobei eine Bewegung des Knopfs (18) von der Ausgangsposition in die Betätigungsposition das erste Seil (16) bewegt, wodurch die erste Hakenanordnung (20) und die erste Schließeranordnung (22) aus dem Eingriff gelöst werden.

2. Verriegelungssystem (10) nach Anspruch 1, wobei eine Bewegung des ersten Seils (16) eines von dem ersten Haken (50) und dem ersten Schließer (52) bewegt, um die erste Hakenanordnung (20) und die erste Schließeranordnung (22) aus dem Eingriff zu lösen.

3. Verriegelungssystem (10) nach Anspruch 2, wobei der Knopf (18) zwischen der Ausgangsposition und der Betätigungsposition schwenkbar ist, und wobei das Schwenken des Knopfs (18) das erste Kabel (16) schiebt oder zieht, wodurch die erste Hakenanordnung (20) und die erste Schließeranordnung (22) aus dem Eingriff gelöst werden.

4. Verriegelungssystem (10) nach Anspruch 3, wobei eine Schwenkbewegung des Knopfs (18) das erste Seil (16) schiebt oder zieht, wodurch ein erster Auslöserarm (68) aus einer Eingriffsposition in eine gelöste Position geschwenkt wird und den ersten Haken (50) vom ersten Schließer (52) löst.

5. Verriegelungssystem (10) nach Anspruch 1, wobei das erste drehbare Element (66) in Richtung der zweiten Position vorgespannt ist.

6. Verriegelungssystem (10) nach Anspruch 5, wobei das erste drehbare Element (66) ein erstes Schnapperelement (74) umfasst, welches mit einem ersten Absatz (76) an dem ersten Auslösearm (68) in der ersten Position und mit einem ersten Stoppelement (80) in der zweiten Position eingreift.

7. Verriegelungssystem (10) nach Anspruch 2, wobei die Tasterknopfanordnung (12) einen ersten Anzeiger (28) umfasst, welcher von einer ersten Position in eine zweite Position beweglich ist, wenn der Knopf (18) von der Ausgangsposition in die Betätigungsposition bewegt wird.

8. Verriegelungssystem (10) nach Anspruch 4, wobei die Tasterknopfanordnung (12) einen ersten Anzeiger (28) umfasst, welcher von einer ersten Position in eine zweite Position beweglich ist, wenn der Knopf (18) von der Ausgangsposition in die Betätigungsposition bewegt wird, und wobei der erste Haken (50) den ersten Auslöserarm (68) in der gelösten Position hält, wenn sich das erste drehbare Element (66) in der zweiten Position befindet, wodurch der Anzeiger (28) in der zweiten Position gehalten wird.

9. Verriegelungssystem (10) nach Anspruch 2, wobei der Knopf (18) zwischen der Ausgangsposition und der Betätigungsposition schwenkbar ist, und wobei das Schwenken des Knopfs (18) ein erstes Nockenelement (26) schwenkt, welches das erste Kabel (16) schiebt oder zieht, wodurch der erste Haken (50) vom ersten Schließer (52) gelöst wird.

10. Flugzeugablagebehälter (100), welcher Folgendes beinhaltend:
ein oberes Gehäuse (104), welches ein erstes und ein zweites Seitenpaneel (106) beinhaltet,
einen Eimer (102), welcher mit dem oberen Gehäuse (104) zum Definieren eines Behälterinneren zusammenarbeitet, wobei der Eimer (102) in Bezug auf das obere Gehäuse (104) zwischen einer geöffneten Position und einer geschlossenen Position beweglich ist, wobei der Eimer einen Boden (108) und eine erste und eine zweite Seitenwand (110) umfasst, und
ein Verriegelungssystem (10) nach einem der Ansprüche 1 bis 9,
wobei die Tasterknopfanordnung (12) einem von dem Eimer (102) und dem oberen Gehäuse (104) zugeordnet ist,
wobei die erste Hakenanordnung (20) einem von dem Eimer (102) und dem oberen Gehäuse (104) zugeordnet ist und die erste Schließeranordnung dem anderen von dem Eimer (102) und dem oberen Gehäuse (104) zugeordnet ist, und
wobei die Bewegung des Knopfs (18) von der Ausgangsposition in die Betätigungsposition das erste Seil (16) bewegt, wodurch die erste Hakenanordnung (20) und die erste Schließeranordnung (22) aus dem Eingriff gelöst werden, wodurch der Eimer (102) sich von der geschlossenen Position in die geöffnete Position bewegt.

11. Verfahren zum Öffnen eines Ablagebehälters (100), wobei das Verfahren die folgenden Schritte beinhaltet:
Bewegen eines Knopfs (18) von einer Ausgangsposition in eine Betätigungsposition, wobei die Bewegung des Knopfs (18) von der Ausgangsposition in die Betätigungsposition ein erstes Seil (16) bewegt, wodurch eine erste Hakenanordnung (20) und eine erste Schließeranordnung (22) aus dem Eingriff gelöst werden, wobei ein Eimer (102) sich von einer geschlossenen Position in eine geöffnete Position bewegt, wobei die erste Hakenanordnung (20) einen ersten Haken (50) umfasst und die erste Schließeranordnung (22) einen ersten Schließer (52) umfasst, wobei die erste Hakenanordnung (20) ein erstes drehbares Element (66) umfasst, welches den ersten Haken (50) umfasst, wobei das erste drehbare Element (66) zwischen einer ersten Position, in welcher der erste Haken (50) mit dem ersten Schließer (52) eingreift und einer zweiten Position beweglich ist, in welcher der erste Haken (50) nicht mit dem ersten Schließer (52) eingreift, wobei das erste drehbare Element (66) in einem Gehäuse (64) eingeschlossen ist und ein erstes Abschlusselement (72) beinhaltet, wobei das Gehäuse (64) eine in einer oberen Wand (64a) davon definierte Schließeröffnung (64b) umfasst, und wobei das erste Abschlusselement (72) allgemein mit der Schließeröffnung (64b) derart ausgefluchtet ist, dass es Objekte am Eintreten in die Schließeröffnung (64b) hindert, wenn sich das erste drehbare Element (66) in der zweiten Position befindet.

12. Verfahren nach Anspruch 11, wobei die Bewegung des ersten Seils (16) eines von dem ersten Haken (50) und dem ersten Schließer (52) bewegt, um die erste Hakenanordnung (20) und die erste Schließeranordnung (22) aus dem Eingriff zu lösen.

13. Verfahren nach Anspruch 12, wobei der Knopf (18) zwischen der Ausgangsposition und der Betätigungsposition schwenkbar ist, und wobei das Schwenken des Knopfs (18) das erste Kabel (16) schiebt oder zieht, wodurch die erste Hakenanordnung (20) und die erste Schließeranordnung (22) aus dem Eingriff gelöst werden.

14. Verfahren nach Anspruch 13, wobei die Schwenkbewegung des Knopfs (18) das erste Seil (16) schiebt oder zieht, wodurch ein erster Auslöserarm (68) aus einer Eingriffsposition in eine gelöste Position geschwenkt wird und den ersten Haken (50) vom ersten Schließer (52) löst.

## Revendications

1. Système de verrouillage (10), comprenant :
un ensemble de bouton à palette (12) incluant un bouton (18) pouvant être déplacé entre une position de repos et une position d'actionnement ;
un premier ensemble de verrouillage (14) incluant un premier ensemble de gâchette (22) et un premier ensemble de crochet (20), dans lequel le premier ensemble de crochet (20) inclut un premier crochet (50), le premier ensemble de gâchette (22) incluant une première gâchette (52), dans lequel le premier ensemble de crochet (20) inclut un premier élément rotatif (66) incluant le premier crochet (50), dans lequel le premier élément rotatif (66) peut être déplacé entre une première position, dans laquelle le premier crochet (50) est engagé dans la première gâchette (52), et une deuxième position, dans laquelle le premier crochet (50) n'est pas engagé dans la première gâchette (52), dans lequel le premier élément rotatif (66) est renfermé dans un boîtier (64) et inclut un premier élément de fermeture (72), dans lequel le boîtier (64) inclut une ouverture de gâchette (64b) définie dans sa paroi supérieure (64a) et dans lequel le premier élément de fermeture (72) est en général aligné avec l'ouverture de gâchette (64b), de sorte à empêcher l'entrée d'objets dans l'ouverture de gâchette (64b) lorsque le premier élément rotatif (66) se trouve dans la deuxième position ; et
un premier câble (16) s'étendant entre l'ensemble de bouton à palette (12) et le premier ensemble de verrouillage (14), dans lequel le déplacement du bouton (18) de la position de repos vers la position d'actionnement entraîne le déplacement du premier câble (16), dégageant ainsi le premier ensemble de crochet (20) et le premier ensemble de gâchette (22).

2. Système de verrouillage (10) selon la revendication 1, dans lequel le déplacement du premier câble (16) déplace l'un parmi le premier crochet (50) et la première gâchette (52), afin de dégager le premier ensemble de crochet (20) et le premier ensemble de gâchette (22).

3. Système de verrouillage (10) selon la revendication 2, dans lequel le bouton (18) peut pivoter entre la position de repos et la position d'actionnement, et dans lequel le pivotement du bouton (18) pousse ou tire le premier câble (16), dégageant ainsi le premier ensemble de crochet (20) et le premier ensemble de gâchette (22).

4. Système de verrouillage (10) selon la revendication 3, dans lequel le déplacement pivotant du bouton (18) pousse ou tire le premier câble (16), entraînant ainsi le pivotement d'un premier bras de déclenchement (68) d'une position engagée vers une position dégagée et dégageant le premier crochet (50) de la première gâchette (52).

5. Système de verrouillage (10) selon la revendication 1, dans lequel le premier élément rotatif (66) est sollicité vers la deuxième position.

6. Système de verrouillage (10) selon la revendication 5, dans lequel le premier élément rotatif (66) inclut un premier élément de cliquet (74) s'engageant dans un premier rebord (76) sur le premier bras de déclanchement (68) dans la première position, et dans un premier élément d'arrêt (80) dans la deuxième position.

7. Système de verrouillage (10) selon la revendication 2, dans lequel l'ensemble de bouton à palette (12) inclut un premier indicateur (28) pouvant être déplacé d'une première position vers une deuxième position lorsque le bouton (18) est déplacé de la position de repos vers la position d'actionnement.

8. Ensemble de verrouillage (10) selon la revendication 4, dans lequel l'ensemble de bouton à palette (12) inclut un premier indicateur (28) pouvant être déplacé d'une première position vers une deuxième position lorsque le bouton (18) est déplacé de la position de repos vers la position d'actionnement, et dans lequel le premier crochet (50) retient le premier bras de déclenchement (68) dans la position dégagée lorsque le premier élément rotatif (66) se trouve dans la deuxième position, retenant ainsi l'indicateur (28) dans la deuxième position.

9. Système de verrouillage (10) selon la revendication 2, dans lequel le bouton (18) peut pivoter entre la position de repos et la position d'actionnement, et dans lequel le pivotement du bouton (18) entraîne le pivotement d'un premier élément de came (26) poussant ou tirant le premier câble (16), dégageant ainsi le premier crochet (50) de la première gâchette (52).

10. Compartiment de rangement d'avion (100), comprenant :
un boîtier supérieur (104) incluant des premier et deuxième panneaux latéraux (106) ;
un bac (102) coopérant avec le boîtier supérieur (104) pour définir un intérieur du compartiment, dans lequel le bac (102) peut être déplacé par rapport au boîtier supérieur (104) entre une position ouverte et une position fermée, le bac incluant un fond (108) et des première et deuxième parois latérales (110) ; et
un système de verrouillage (10) selon l'une quelconque des revendications 1 à 9 ;
dans lequel l'ensemble de bouton à palette (12) est associé à l'un parmi le bac (102) et le boîtier supérieur (104) ;
dans lequel le premier ensemble de crochet (20) est associé à l'un parmi le bac (102) et le boîtier supérieur (104), le premier ensemble de gâchette étant associé à l'autre parmi le bac (102) et le boitier supérieur (104) ; et
dans lequel ledit déplacement du bouton (18) de la position de repos vers la position d'actionnement entraîne le déplacement du premier câble (16), dégageant ainsi le premier ensemble de crocher (20) et le premier ensemble de gâchette (22), le bac (102) se déplaçant ainsi de la position fermée vers la position ouverte.

11. Procédé d'ouverture d'un compartiment de rangement (100), le procédé comprenant les étapes ci-dessous :
déplacement d'un bouton (18) d'une position de repos vers une position d'actionnement, le déplacement du bouton (18) de la position de repos vers la position d'actionnement entraînant le déplacement d'un premier câble (16), dégageant ainsi un premier ensemble de crochet (20) et un premier ensemble de gâchette (22), dans lequel un bac (102) se déplace d'une position fermée vers une position ouverte, dans lequel le premier ensemble de crochet (20) inclut un premier crochet (50), le premier ensemble de gâchette (22) incluant une première gâchette (52), dans lequel le premier ensemble de crochet (20) inclut un premier élément rotatif (66) incluant le premier crochet (50), dans lequel le premier élément rotatif (66) peut être déplacé entre une première position, dans laquelle le premier crochet (50) est engagé dans la première gâchette (52), et une deuxième position, dans laquelle le premier crochet (50) n'est pas engagé dans la première gâchette (52), dans lequel le premier élément rotatif (66) est renfermé dans un boîtier (64) et inclut un premier élément de fermeture (72), dans lequel le boîtier (64) inclut une ouverture de gâchette (64b) définie dans sa paroi supérieure (64a), et dans lequel le premier élément de fermeture (72) est en général aligné avec l'ouverture de gâchette (64b), de sorte à empêcher l'entrée d'objets dans l'ouverture de gâchette (64b) lorsque le premier élément rotatif (66) se trouve dans la deuxième position.

12. Procédé selon la revendication 11, dans lequel le déplacement du premier câble (16) déplace l'un parmi le premier crocher (50) et la première gâchette (52), afin de dégager le premier ensemble de crochet (20) et le premier ensemble de gâchette (22).

13. Procédé selon la revendication 12, dans lequel le bouton (18) peut pivoter entre la position de repos et la position d'actionnement, et dans lequel le pivotement du bouton (18) pousse ou tire le premier câble (16), dégageant ainsi le premier ensemble de crochet (20) et le premier ensemble de gâchette (22).

14. Procédé selon la revendication 13, dans lequel le déplacement pivotant du bouton (18) pousse ou tire le premier câble (16), entraînant ainsi le pivotement d'un premier bras de déclenchement (68) d'une position engagée vers une position dégagée, et dégageant le premier crochet (50) de la première gâchette (52).
